# FASCICULE DE BREVET EUROPEEN

(11) **EP 2 856 732 B1**
(45) Date de publication et mention de la délivrance du brevet: **28.04.2021**
(21) Numéro de dépôt: 13729982.2
(22) Date de dépôt: 17.05.2013
(51) Int. Cl.: H04L 29/06

(54) **PROCÉDÉ ET ENTITÉ DE TRAITEMENT D'UN MESSAGE**
VERFAHREN UND EINHEIT ZUR VERARBEITUNG EINER NACHRICHT
METHOD AND ENTITY FOR PROCESSING A MESSAGE

(30) Priorité: 29.05.2012 FR 1254919
(43) Date de publication de la demande: 08.04.2015
(73) Titulaire: ORANGE, 75015 Paris (FR)
(72) Inventeur: BOUVET, Bertrand, F-22700 Perros Guirec (FR)
(74) Mandataire: Cabinet Beau de Loménie
(86) Numéro de dépôt international: PCT/FR2013/051086
(87) Numéro de publication internationale: WO 2013/178909

(56) Documents cités:
- EP-A1- 2 205 020
- WO-A1-2010/099829
- US-A1- 2009 316 690
- Gallego Gómez O. et al: "RCS-e - Advanced Communications: Services and Client Specification Version 1.1", GSMA Rich Communications , 8 avril 2011 (2011-04-08), pages 1-171, XP002685665, Extrait de l'Internet: URL:http://www.gsma.com/rcs/wp-content/upl oads/2012/03/rcsespecv11final.zip [extrait le 2012-10-22]
- Anonymous: "RFC 3261 - SIP: Session Initiation Protocol", , 1 June 2002 (2002-06-01), XP055324488, Retrieved from the Internet: URL:https://tools.ietf.org/html/rfc3261 [retrieved on 2016-11-30]

## Description

### Arrière-plan de l'invention

L'invention se rapporte au domaine général des télécommunications et des architectures de réseau IP (Internet Protocol) multimédia, telles que des architectures de réseau utilisant notamment la technologie désignée par "voix sur IP" (ou VoIP pour Voice over IP).

Elle a une application privilégiée mais non limitative dans le contexte de cœurs de réseau IP multimédia mettant en œuvre le protocole d'initiation de sessions multimédia SIP (Session Initiation Protocol), défini par le standard IETF (Internet Engineering Task Force) et décrit notamment dans le document RFC 3261 intitulé « SIP: Session Initiation Protocol », Juin 2002, édité par l'IETF. L'invention s'applique notamment aux cœurs de réseau IP multimédia s'appuyant sur une architecture IMS (IP Multimedia Subsystem) telle que proposée par le standard 3GPP (Third Generation Partnership Project).

Toutefois, elle peut également être utilisée en association avec d'autres architectures de cœurs de réseau IP multimédia, telles que par exemple des architectures propriétaires, mettant en œuvre ou non le protocole SIP pour l'établissement de sessions multimédia (voix, texte, vidéo, données, etc.).

L'invention concerne plus particulièrement le traitement, par une entité dite de traitement, d'un message reçu en provenance d'un premier dispositif, et destiné à un second dispositif (tel qu'un terminal ou un serveur) géré par un cœur de réseau IP multimédia, dans le cadre d'un service de communication multimédia s'appuyant sur un mécanisme d'auto-découverte des capacités et de l'état du distant (autrement dit ici, du second dispositif).

De façon connue, un tel mécanisme d'auto-découverte prévoit l'envoi par le premier dispositif au second dispositif « distant », d'un message spécifique l'invitant à déclarer en réponse à ce message, d'une part son état (ex. disponible, en communication, hors couverture, non enregistré, etc.), et d'autre part ses capacités, c'est-à-dire les services, les protocoles, et/ou les applications qu'il supporte ou met en œuvre.

Ce message spécifique est désigné par « message de découverte des capacités et de l'état du distant » ou « message de découverte des capacités et de l'état du second dispositif » dans la suite de la description. Un exemple d'un tel message pour le protocole SIP est un message s'appuyant sur la méthode SIP OPTIONS.

Ce mécanisme d'auto-découverte est utilisé notamment par le service multimédia RCS-e (Rich Communication Suite - Enhanced), décrit dans le document intitulé « RCS-e Advanced Communications: Services and client spécification », version 1.1, Avril 8, 2011.

De façon connue, le standard RCS-e permet à deux terminaux enregistrés auprès d'un cœur de réseau IMS, d'établir une communication via un réseau à commutation de circuits non relié au cœur de réseau IMS (ex. via un réseau GSM (Global System for Mobile Communications)), puis en parallèle ou en marge de cette communication, d'utiliser via un réseau à commutation de paquets connecté au cœur de réseau IMS (IP Multimedia Subsystem), des services multimédia additionnels dits de communication enrichie, tels que par exemple un service de transfert de photos, un service de messagerie instantanée, un service de partage de fichiers, etc.

A cette fin, le standard RCS-e prévoit, lors notamment de la création d'un contact dans le répertoire d'un premier terminal ou de l'établissement d'une communication entre un premier terminal et un deuxième terminal, la mise en œuvre d'un mécanisme de découverte automatique de l'état et des capacités RCS-e du deuxième terminal par le premier terminal (et inversement), basé sur l'utilisation d'un message SIP (Session Initiation Protocol) OPTIONS.

L'utilisation d'un mécanisme d'auto-découverte de l'état et des capacités du distant peut également être envisagée dans le cadre d'un service après-vente (SAV) fourni par un opérateur télécom ou par un fournisseur de service, afin d'obtenir des informations pertinentes concernant l'état et les capacités d'un dispositif sur lequel une opération de maintenance est prévue ou souhaitée.

Conformément au protocole SIP, tout dispositif récepteur d'un message de découverte SIP OPTIONS est tenu d'y répondre de manière transparente, en envoyant au dispositif émetteur du message de découverte, un message de réponse approprié traduisant son état et contenant ses capacités.

Ainsi, par exemple, si le second dispositif est disponible et compatible avec le service RCS-e, il envoie un message de réponse 200 OK au premier dispositif, contenant dans un champ « feature tag » l'identifiant du service RCS-e, ainsi que les identifiants des autres services supportés par le second dispositif (via d'autres features tag et/ou des sessions SDP (Session Description Protocol». Le message de réponse 200 OK contient également les méthodes SIP supportées par le second dispositif, etc.

Il convient de noter que, conformément à la norme, la réception d'un message SIP OPTIONS par le second dispositif se fait à l'insu de l'utilisateur du second dispositif. Elle n'est pas signalée spécifiquement à l'utilisateur et ne déclenche aucune sonnerie du second dispositif ou notification de la réception du message SIP OPTIONS.

La norme SIP offre donc aujourd'hui la possibilité à tout dispositif, via l'envoi d'un message SIP OPTIONS, de découvrir en toute discrétion l'état et/ou les capacités d'un dispositif distant, sans que l'utilisateur de ce dispositif distant ne soit informé de la mise en œuvre de ce mécanisme de découverte ni n'ait trace de cette mise en œuvre.

On comprend bien dès lors que des abus peuvent résulter d'un tel mode de fonctionnement. On peut redouter notamment l'envoi intempestif de messages SIP OPTIONS par des acteurs économiques peu scrupuleux, en vue d'obtenir des informations concernant les terminaux des utilisateurs, et d'exploiter ces informations à des fins purement commerciales (ex. revente de ces informations à des sociétés de commerce).

Le document US 2009/316690 décrit un procédé permettant de fournir les capacités d'agents utilisateurs.

Il existe donc un besoin d'un mécanisme de protection contre de tels abus.

### Objet et résumé de l'invention

L'invention est divulguée dans les revendications 1 à 13. L'invention répond notamment à ce besoin en proposant un procédé de traitement d'un message reçu en provenance d'un premier dispositif et destiné à un second dispositif géré par un cœur de réseau IP multimédia, ce procédé étant destiné à être mis en œuvre par une entité de traitement lorsque ce message reçu est un message de découverte des capacités et de l'état du second dispositif. Le procédé de traitement selon l'invention est remarquable en ce qu'il comprend :
- une étape d'obtention d'un identifiant du premier dispositif à partir d'un champ du message de découverte reçu; et
- une étape de sélection, en fonction de cet identifiant, d'un mode de réponse au message de découverte reçu parmi un ensemble prédéfini contenant au moins deux modes de réponse.

Corrélativement, l'invention propose également une entité de traitement d'un message reçu en provenance d'un premier dispositif et destiné à un second dispositif géré par un cœur de réseau IP multimédia, comprenant des moyens activés si le message reçu est un message de découverte des capacités et de l'état du second dispositif et comprenant :
- des moyens d'obtention d'un identifiant du premier dispositif à partir d'un champ du message de découverte reçu; et
- des moyens aptes à sélectionner, en fonction de cet identifiant, un mode de réponse au message de découverte reçu parmi un ensemble prédéfini contenant au moins deux modes de réponse.

L'invention propose ainsi, pour se prémunir contre les abus évoqués précédemment, de filtrer les messages de découverte des capacités et de l'état du distant destinés à un second dispositif en fonction de l'origine de ces messages.

Ce filtrage est réalisé, conformément à l'invention, en prenant en compte l'identité du premier dispositif à l'origine du message de découverte pour décider d'un mode (c'est-à-dire d'une stratégie) de réponse à ce message de découverte (ex. absence de réponse ou réponse transparente).

Autrement dit, l'invention introduit un degré de liberté supplémentaire dans la façon dont on répond à un message de découverte des capacités et de l'état du distant : elle offre la possibilité à l'entité de traitement de contrôler la réponse faite au message de découverte en fonction de l'identifiant du premier dispositif.

En corollaire, grâce à l'invention, on peut configurer l'entité de traitement pour qu'il soit répondu au message de découverte de façon transparente (c'est-à-dire en envoyant un message de réponse contenant l'état et les capacités « réels » du second dispositif) qu'à des dispositifs autorisés ou choisis, par exemple par l'utilisateur du second dispositif ou par l'opérateur du cœur de réseau IP multimédia.

Ainsi, l'invention permet de contrebalancer l'opportunité donnée au premier dispositif, par la norme SIP actuelle, de connaître l'état et les capacités du second dispositif à l'insu de l'utilisateur du second dispositif. Le fait en effet de disposer, conformément à l'invention, de plusieurs modes de réponse possibles au message de découverte offre la possibilité d'adapter dans ces modes de réponse la quantité et les informations fournies au premier dispositif en fonction de l'identité du premier dispositif.

Différents modes de réponse peuvent être envisagés dans l'ensemble prédéfini parmi lequel est opérée la sélection de l'entité de traitement pour parer aux abus évoqués précédemment. Ces modes de réponse peuvent avantageusement être paramétrés par l'utilisateur du second dispositif lui-même, via une interface utilisateur (ex. interface web ou application développée à cette effet), ou par l'opérateur du cœur de réseau IP multimédia.

Préférentiellement, cet ensemble prédéfini de modes de réponses contient au moins :
- un mode de réponse comprenant un envoi au premier dispositif d'une réponse partielle, prédéfinie ou erronée au message de découverte ; et
- un mode de réponse comprenant un envoi au premier dispositif d'une réponse transparente au message de découverte contenant les capacités et l'état du second dispositif.

Selon ces deux modes de réponse, une réponse est toujours envoyée au premier dispositif, ce qui est en accord avec l'obligation de réponse prévue notamment dans le protocole SIP.

En revanche, le contenu à proprement parler de cette réponse est adapté en fonction de l'identifiant du premier dispositif. Ainsi, on peut configurer l'entité de traitement, via des règles de sélection appropriées, pour envoyer au premier dispositif :
- une réponse transparente, c'est-à-dire qui reflète et/ou contient l'ensemble des capacités et l'état réel du second dispositif, lorsque par exemple cet identifiant vérifie un critère prédéterminé ; et
- une réponse partielle (c'est-à-dire incomplète dans le sens où elle n'identifie qu'une partie seulement des capacités du second dispositif ou elle ne reflète que son état), prédéfinie ou contenant des informations erronées, lorsque l'identifiant ne vérifie pas ce critère

L'envoi systématique d'une réponse au premier dispositif, qu'elle soit transparente ou non, permet d'éviter l'émission par le premier dispositif de messages de retransmission, du fait de la non réception d'un message de réponse au message de découverte. On préserve ainsi la charge du réseau, tout en contrôlant les informations envoyées au premier dispositif sur l'état et les capacités du second dispositif.

En variante, on peut envisager que l'ensemble prédéfini contienne au moins :
- un mode de réponse comprenant un envoi au premier dispositif d'une réponse transparente au message de découverte contenant les capacités et l'état du second dispositif ; et
- un mode de réponse comprenant l'absence de réponse au message de découverte.

La prévision d'un mode de réponse dans lequel aucune réponse n'est envoyée au premier dispositif peut présenter un avantage en termes de facturation pour l'utilisateur du second dispositif.

En effet, outre la divulgation d'informations « privées » concernant le second dispositif, le mécanisme d'auto-découverte prévu aujourd'hui par la norme SIP pose également le problème de la facturation de l'envoi d'un message de réponse au premier dispositif, et du coût que cela peut représenter au global pour le second dispositif de répondre à l'ensemble des messages SIP OPTIONS qu'il reçoit.

Plus précisément, le coût associé à l'envoi d'un message de réponse à un message SIP OPTIONS incombe naturellement au second dispositif (tout du moins, il est comptabilisé dans le débit en liaison montante auquel l'utilisateur du second dispositif peut prétendre compte tenu de son abonnement auprès de l'opérateur du réseau). L'invention permet donc à l'utilisateur du second dispositif de sélectionner les dispositifs auxquels il souhaite répondre et de limiter par ce biais, les coûts associés.

Il convient de noter que l'invention s'applique de façon ciblée aux messages de découverte des capacités et de l'état du distant, et non à l'ensemble des messages destinés au second dispositif. L'invention vise en effet à protéger l'utilisateur du second dispositif contre une atteinte à des informations privées concernant le second dispositif requises via des messages reçus à l'insu de l'utilisateur, et auxquels le second dispositif est tenu de répondre conformément à la norme. L'invention ne s'intéresse pas à proprement parler au traitement d'autres types de messages que des messages de découverte de l'état et des capacités du distant.

Dans un mode particulier de réalisation, le message de découverte traité par l'entité de traitement est un message SIP OPTIONS et le champ de ce message contenant l'identifiant du premier dispositif est un champ FROM ou un champ P-Asserted-Identity (en cas notamment de masquage de l'identifiant du premier dispositif).

Comme évoqué précédemment, le choix du mode de réponse au message de découverte peut être réalisé en fonction de différents critères portant sur tout ou partie de l'identifiant du premier dispositif (typiquement sur tout ou partie du contenu du champ FROM ou P-Asserted-Identity pour un message SIP OPTIONS) et en fonction de différentes règles de sélection prédéterminés.

Ainsi, par exemple, l'entité de traitement peut sélectionner un mode de réponse parmi l'ensemble prédéfini en fonction de la présence ou non de l'identifiant du premier dispositif dans au moins une liste prédéfinie d'identifiants associée au second dispositif.

Cette liste peut être définie notamment par l'utilisateur du second dispositif, en fonction des dispositifs auquel il accepte d'envoyer des informations concernant l'état et les capacités de son dispositif.

Il peut s'agir aussi bien d'une liste contenant les identifiants des dispositifs admis par l'utilisateur, qu'au contraire d'une liste « noire » contenant les identifiants des dispositifs auxquels l'utilisateur ne souhaite pas communiquer l'état et les capacités de son dispositif.

On peut également envisager de définir une liste d'identifiants de dispositifs auxquels l'utilisateur ne souhaite communiquer qu'une partie de ses capacités ou son état seulement.

Dans un mode particulier de réalisation, cette liste prédéfinie d'identifiants associée au second dispositif peut prendre la forme d'un répertoire associé au second dispositif, stocké en local sur le second dispositif ou au contraire sur un équipement distant, dans le cœur de réseau IP multimédia (sur un serveur d'application ou dans un système d'information de l'opérateur du cœur de réseau) ou dans un autre réseau (ex. sur une passerelle d'accès au cœur de réseau IP multimédia, ou sur un équipement tel un terminal connecté à un réseau local auquel est connecté également le second dispositif, etc.).

Cette variante permet de simplifier la mise en œuvre de l'invention en utilisant une liste déjà disponible pour d'autres applications (pas de configuration préalable de la liste requise).

En outre, elle se base sur des identifiants déjà connus du second dispositif correspondant à des dispositifs avec lesquels a priori l'utilisateur du second dispositif a, à un moment ou à un autre, accepté de communiquer.

Dans un autre mode de réalisation, l'entité de traitement sélectionne un mode de réponse parmi l'ensemble prédéfini en fonction de l'appartenance ou non de l'identifiant du premier dispositif à un domaine de réseau identique au domaine de réseau du second dispositif ou à un domaine de réseau autorisé.

Ce mode de réalisation permet de prendre en compte des paramètres réseau pour le filtrage des messages de découverte.

Il présente une application privilégiée pour filtrer par exemple les messages de découverte en provenance de pays étrangers (ex. en filtrant tous les identifiants ayant une extension différente de l'extension « .fr » relative aux domaines de réseau français) ou de réseaux opérés par d'autres opérateurs que celui du cœur de réseau IP multimédia gérant le second dispositif, pour des raisons de facturation notamment.

Dans un autre mode de réalisation, l'entité de traitement sélectionne un mode de réponse parmi l'ensemble prédéfini selon si l'identifiant du premier dispositif comprend ou non une partie utilisateur prédéterminée ou d'un type prédéterminé (tel qu'un préfixe de numéro international ou une URI particulière par exemple).

Par « partie utilisateur » on entend la partie de l'identifiant qui est propre à l'utilisateur du premier dispositif, c'est-à-dire qui identifie l'utilisateur du premier dispositif et ne correspond pas au domaine ou au réseau gérant celui-ci. Par exemple, pour un identifiant sous la forme d'une adresse de type « nom_user@nom_de_domaine », cette partie utilisateur correspond à l'élément « nom_user » situé à gauche du symbole « @ ».

Pour un message SIP OPTIONS, la partie utilisateur de l'identifiant correspond à la partie « User-Part » du contenu du champ FROM ou P-Asserted-Identity.

Bien entendu, l'invention ne se limite pas à un critère de filtrage ou à une règle de sélection en particulier, et plusieurs critères de filtrage peuvent être appliqués simultanément ou successivement pour sélectionner le mode de réponse.

En outre, d'autres critères de filtrage que ceux évoqués précédemment, portant sur tout ou partie de l'identifiant du premier dispositif peuvent être envisagés, en combinaison ou indépendamment les uns des autres.

Dans un mode de réalisation dans lequel l'ensemble prédéfini contient au moins un mode de réponse où une réponse au message de découverte est envoyée au premier dispositif, cette réponse (i.e. son contenu) dépend d'un nombre et/ou d'un type de sessions en cours pour le second dispositif lors de la réception du message.

On peut ainsi adapter la réponse envoyée au premier dispositif en fonction de l'existence par exemple d'un dialogue en cours avec le premier dispositif. Dans un tel contexte, il est en effet moins gênant d'envoyer une réponse transparente au premier dispositif puisque celui-ci entretient déjà une communication avec le second dispositif. Ceci peut au contraire faciliter l'accès au service multimédia dans le cadre duquel le message de découverte a été envoyé par le premier dispositif.

Par ailleurs, il peut s'avérer utile d'indiquer au premier dispositif l'état des sessions en cours au niveau du second dispositif pour que le premier dispositif puisse adapter le cas échéant ses échanges avec le second dispositif.

Le traitement des messages de découverte conformément à l'invention peut être mis en œuvre à différents niveaux.

Ainsi, l'entité de traitement peut être intégrée notamment dans le second dispositif.

Ceci facilite la configuration du filtrage permis par l'invention (des critères de filtrage et de règles de sélection notamment) par l'utilisateur du second dispositif.

En variante, l'entité de traitement peut être intégrée dans un serveur d'application du cœur de réseau IP multimédia gérant le second dispositif. Ce serveur d'application peut par exemple être déclenché par le cœur de réseau IP multimédia sur réception d'un message de découverte destiné au second dispositif.

Ceci facilite la configuration du filtrage par l'opérateur du cœur de réseau IP multimédia.

Par ailleurs, selon cette variante, il n'est pas nécessaire de modifier le mode de fonctionnement actuel des dispositifs recevant les messages de découverte, qui peuvent continuer, conformément à la norme, à répondre de façon transparente aux messages de découverte. Le filtrage est alors réalisé par le serveur d'application du cœur de réseau IP multimédia sur réception des réponses de ces dispositifs.

L'invention vise donc également un terminal géré par un cœur de réseau IP multimédia et comprenant une entité de traitement selon l'invention d'un message reçu en provenance d'un dispositif et destiné au terminal.

L'invention vise aussi un serveur associé à un cœur de réseau IP multimédia gérant un dispositif, ce serveur comprenant une entité de traitement selon l'invention, d'un message reçu destiné au dispositif.

Ce serveur est par exemple un serveur d'application du cœur de réseau IP multimédia. Il peut s'agir en variante du dispositif auquel est destiné le message reçu.

Dans un mode particulier de réalisation, les différentes étapes du procédé de traitement sont déterminées par des instructions de programmes d'ordinateurs.

En conséquence, l'invention vise aussi un programme d'ordinateur sur un support d'informations, ce programme étant susceptible d'être mis en œuvre dans une entité de traitement ou plus généralement dans un ordinateur, ce programme comportant des instructions adaptées à la mise en œuvre des étapes d'un procédé de traitement tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise également un système de communication comprenant :
- un premier dispositif et un second dispositif géré par un cœur de réseau IP multimédia, le premier dispositif étant adapté à émettre, à destination du second dispositif, un message de découverte des capacités et de l'état du second dispositif ; et
- une entité de traitement selon l'invention apte à recevoir et à traiter le message de découverte émis par le premier dispositif à destination du second dispositif.

On peut également envisager, dans d'autres modes de réalisation, que le procédé de traitement, l'entité de traitement et le système de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent des exemples de réalisation dépourvus de tout caractère limitatif :
- la figure 1 illustre, de façon schématique, un système de communication et une entité de traitement conformes à l'invention dans un premier mode de réalisation ;
- la figure 2 représente, de façon schématique, l'architecture matérielle de l'entité de traitement représentée sur la figure 1 ;
- la figure 3 représente les principales étapes d'un procédé de traitement conforme à l'invention mises en œuvre par l'entité de traitement de la figure 1 dans le premier mode de réalisation ;
- la figure 4 illustre, de façon schématique, un système de communication et une entité de traitement conformes à l'invention dans un second mode de réalisation ; et
- la figure 5 représente les principales étapes d'un procédé de traitement conforme à l'invention mises en œuvre par l'entité de traitement de la figure 4 dans le second mode de réalisation.

### Description détaillée de l'invention

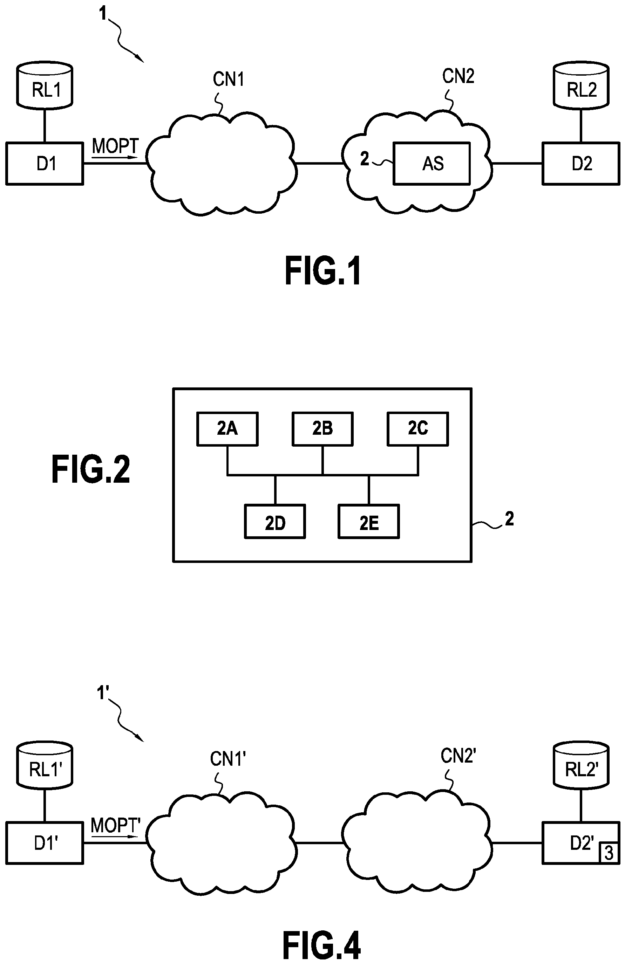

La **figure 1** représente, dans son environnement, un système de communication 1 conforme à l'invention, incluant deux dispositifs D1 et D2, et une entité de traitement 2 selon l'invention, dans un premier mode de réalisation.

Les dispositifs D1 et D2 sont par exemple des terminaux multimédia, tels que des téléphones mobiles intelligents (ou « smartphones » en anglais), aptes à communiquer entre eux par l'intermédiaire de cœurs de réseau IP multimédia CN1 et CN2. Ils disposent chacun d'un répertoire (ou « carnet d'adresse ») local, noté respectivement RL1 et RL2, contenant différents identifiants (ex. numéros de téléphones, adresses SIP, etc.) d'équipements connus et référencés par les utilisateurs respectifs des dispositifs D1 et D2 (et/ou par les opérateurs des cœurs de réseau CN1 et CN2).

Les cœurs de réseau CN1 et CN2 sont ici des cœurs de réseau utilisant la technologie « voix sur IP » et gérant respectivement les dispositifs D1 et D2. Ils implémentent une architecture IMS, telle que définie notamment dans le document 3GPP TS 22.228 « Service requirements for the IP Multimedia Core Network Subsystem (Stage 1) », et mettant en œuvre le protocole d'initiation de session SIP.

Toutefois, en variante, l'invention s'applique également lorsque les cœurs de réseau CN1 et CN2 ne forment qu'un seul cœur de réseau IP multimédia. Elle s'applique aussi à d'autres types de dispositifs (par exemple D1 peut être un terminal et D2 un serveur), à d'autres architectures de cœur de réseau IP multimédia, ainsi qu'à d'autres protocoles d'initiation de session, tels que par exemple à des architectures de cœurs de réseau propriétaires utilisant le protocole SIP ou un autre protocole d'initiation de session propriétaire prévoyant un message de découverte des capacités et de l'état du distant.

Dans l'exemple décrit ici, on envisage le traitement par l'entité de traitement 2 d'un message reçu MOPT de découverte des capacités et de l'état du distant émis par le premier dispositif D1 à destination du second dispositif D2, dans le cadre d'un service de communication multimédia tel que par exemple un service RCS-e. On suppose que les dispositifs D1 et D2 sont enregistrés auprès de leurs cœurs de réseau respectifs CN1 et CN2.

Le message MOPT émis par le dispositif D1 est un message SIP OPTIONS, tel que décrit de façon détaillée dans le document RFC 3261 cité précédemment. Il contient dans un champ FROM, un identifiant ID1 du dispositif D1 à l'origine du message, et dans un champ Request-URI et dans un champ TO, un identifiant ID2 du dispositif D2 destinataire du message.

On suppose que l'utilisateur du dispositif D2 a souscrit, auprès de l'opérateur du cœur de réseau CN2, à l'activation d'un service de filtrage des messages SIP OPTIONS lui étant destinés en fonction des identifiants des dispositifs à l'origine de ces messages et reposant sur la mise en œuvre du procédé de traitement selon l'invention.

L'activation du service de filtrage des messages SIP OPTIONS pour le dispositif D2 est mémorisée dans un profil de l'utilisateur du dispositif D2 stocké au niveau du serveur d'abonnés HSS (Home Subscriber Server)) du cœur de réseau multimédia CN2 (non représenté sur la figure 1).

Dans le premier mode de réalisation illustré à la figure 1, l'entité de traitement 2 des messages SIP OPTIONS selon l'invention est intégrée dans un serveur d'application (ou AS pour « Application Server » en anglais) du cœur de réseau CN2, déclenché sur détection d'un message SIP OPTIONS à destination du dispositif D2. Autrement dit, le serveur d'application 2 est une entité de traitement au sens de l'invention.

Le déclenchement du serveur d'application 2 est activé conformément aux informations (et notamment aux iFC ou Initial Filter Criteria) contenues dans le profil utilisateur de l'utilisateur du dispositif D2 stocké dans le serveur HSS du cœur de réseau CN2, renseignées lors de la souscription de l'utilisation à l'activation du service de filtrage. Le serveur d'application 2 peut être un serveur dédié à la mise en œuvre du procédé de traitement des messages SIP OPTIONS selon l'invention ou un serveur d'application déjà existant et déclenché lors de la mise en œuvre d'autres applications.

Les mécanismes mis en œuvre pour la détection des messages SIP OPTIONS à destination du dispositif D2 et pour le déclenchement du serveur d'application 2 sont connus de l'homme du métier ; ils ne seront donc pas décrits plus en détail ici.

Le serveur d'application 2 est par exemple déclenché par un serveur S-CSCF (Serving Call Session Control Function) du cœur de réseau CN2 ou par un autre serveur situé en aval de ce serveur S-CSCF, après avoir détecté que le message MOPT reçu en provenance du dispositif D1 est un message SIP OPTIONS destiné à un dispositif D2 (identifié notamment grâce au champ « Request URI » ou « To » du message reçu MOPT), ayant activé le service de filtrage conformément à l'invention des messages SIP OPTIONS lui étant destinés.

Le serveur d'application 2 dispose ici de l'architecture matérielle d'un ordinateur telle qu'illustrée schématiquement à la **figure 2****.**

Il comporte notamment un processeur 2A, une mémoire vive 2B, une mémoire morte 2C, une mémoire flash non volatile 2D ainsi que des moyens de communication 2E mettant en œuvre notamment le protocole SIP. Ces moyens de communication lui permettent de communiquer avec les entités du cœur de réseau CN2 et avec le dispositif D2.

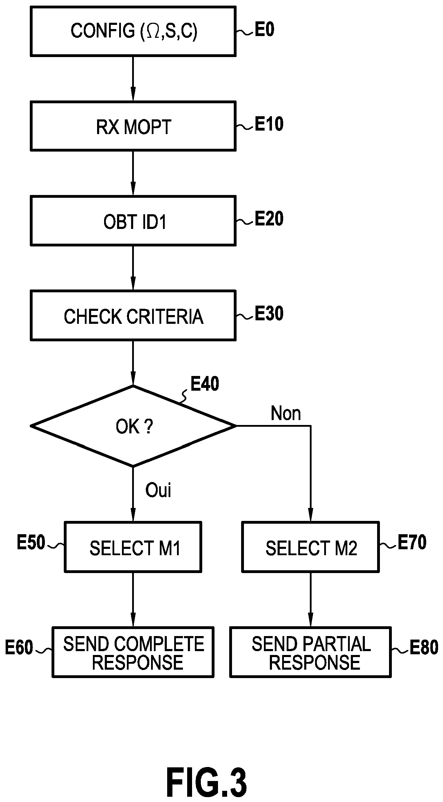

La mémoire morte 2C du serveur d'application 2 constitue un support d'enregistrement conforme à l'invention, lisible par le processeur 2A et sur lequel est enregistré un programme d'ordinateur conforme à l'invention, comportant des instructions pour l'exécution des étapes d'un procédé de traitement selon le premier mode de réalisation de l'invention, décrites maintenant en référence à la figure 3.

La **figure 3** illustre les principales étapes d'un procédé de traitement selon l'invention, mises en œuvre par le serveur d'application 2 de la figure 1 conformément au premier mode de réalisation, après son déclenchement suite à la réception par le cœur de réseau CN2 du message SIP OPTIONS MOPT émis par le dispositif D1 à destination du dispositif D2.

Comme décrit précédemment, le traitement proposé par l'invention consiste à filtrer les messages de découverte (tels que les messages OPTIONS pour le protocole SIP) en fonction des identifiants des dispositifs à l'origine de ces messages, et à sélectionner un mode de réponse parmi un ensemble prédéfini de modes de réponse contenant au moins deux modes de réponse en fonction de ces identifiants.

La mise en œuvre de ce traitement s'appuie ici sur une définition préalable de trois ensembles, à savoir :
(1) d'un ensemble de modes de réponse possibles aux messages de découverte reçus, noté Ω ;
(2) d'un ensemble, noté C, composé d'un ou de plusieurs critères avec lesquels vont être comparés les identifiants des dispositifs à l'origine de ces messages de découverte (ces critères peuvent porter sur tout ou partie des identifiants) ; et
(3) d'un ensemble, noté S, de règles de sélection destinées à associer à un identifiant d'un dispositif à l'origine d'un message de découverte, un mode de réponse de l'ensemble Ω, lorsque l'identifiant vérifie un ou plusieurs critères déterminés de l'ensemble C.

Ainsi à titre illustratif, les modes de réponse suivants peuvent être envisagés dans l'ensemble Ω :
- absence de réponse au message de découverte ;
- envoi d'une réponse transparente au message de découverte, c'est-à-dire, contenant l'état et les capacités du dispositif interrogé (i.e. D2 ici), comme défini actuellement dans la norme SIP ;
- envoi d'une réponse partielle au message de découverte, constituée par exemple d'un message reflétant un état du dispositif interrogé sans inclure ses capacités, d'un message reflétant un état du dispositif interrogé et seulement une partie de ses capacités, ou encore d'un message prédéfini ne contenant que ses capacités ;
- envoi d'une réponse prédéfinie au message de découverte, constituée par exemple pour le protocole SIP, d'un message « 404 NOT FOUND », « 480 TEMPORARILY UNAVAILABLE », « 408 TIME OUT », « 200 OK » ou « 486 BUSY HERE » ;
- envoi d'une réponse erronée au message de découverte, reflétant par exemple un état distinct de l'état réel du dispositif interrogé et/ou des capacités ne correspondant pas aux capacités du dispositif interrogé.

De façon similaire, les critères suivants, portant sur tout ou partie de l'identifiant du dispositif à l'origine du message de découverte, peuvent être envisagés dans l'ensemble C :
- présence ou non de l'identifiant du dispositif à l'origine du message de découverte dans une liste prédéfinie associée au dispositif interrogé. Cette liste peut être notamment un répertoire (ou « carnet d'adresses ») local stocké sur le dispositif interrogé ou stocké sur un équipement distant dans un réseau (par exemple, dans le cœur de réseau IP multimédia CN2, au niveau du serveur d'application 2 ou dans un système d'information de l'opérateur réseau du dispositif D2, etc.). Il peut s'agir, en variante, d'une liste d'identifiants de dispositifs autorisés à recevoir l'état et les capacités réels du dispositif interrogé, stockée par exemple au niveau du serveur d'application 2 ou dans un système d'information de l'opérateur réseau du dispositif D2 pouvant être consultée par le serveur d'application 2, et configurée par l'utilisateur du dispositif interrogé. Il peut s'agir, dans une autre variante, d'une liste configurée par l'utilisateur d'identifiants « interdits » auxquels l'utilisateur refuse de communiquer l'état et les capacités de son dispositif, stockée par exemple au niveau du serveur d'application 2 ou dans un système d'information de l'opérateur réseau du dispositif D2 pouvant être consultée par le serveur d'application 2 ;
- appartenance ou non de l'identifiant du dispositif à l'origine du message de découverte à un domaine de réseau identique au domaine de réseau du dispositif interrogé ou à un domaine autorisé (par l'opérateur du cœur de réseau ou par l'utilisateur du dispositif interrogé) ;
- présence ou non dans l'identifiant du dispositif à l'origine du message de découverte d'une partie utilisateur prédéterminée (i.e. partie « User Part » de l'identifiant pour un message SIP OPTIONS) ou d'un type prédéterminé (ex. contenant un numéro international différent du préfixe « +33 », ou un préfixe spécifique tels que « +331 »-« +335 », « +338 » ou « +339 », ou correspondant à un type d'URI (Uniform Request Identifier) particulier tel qu'une SIP URI ou une TEL URI) ;
- etc.

Enfin, on peut envisager les règles de sélection suivantes dans l'ensemble S :
- si l'identifiant du dispositif à l'origine du message de découverte n'est pas présent dans le répertoire local du dispositif interrogé, on sélectionne le mode de réponse « absence de réponse au message de découverte » ;
- si l'identifiant du dispositif à l'origine du message de découverte est présent dans le répertoire local du dispositif interrogé, on sélectionne le mode de réponse « envoi d'une réponse transparente au message de découverte » ;
- etc.

Bien entendu, ces exemples ne sont donnés qu'à titre illustratif et d'autres modes de réponse, d'autres critères portant sur tout ou partie des identifiants ainsi que d'autres règles de sélection peuvent être envisagés dans le cadre de l'invention.

Notamment on peut également définir des règles de sélection s'appuyant sur une pluralité de critères (ex. si l'identifiant du dispositif à l'origine du message de découverte est dans le même domaine réseau que l'identifiant du dispositif interrogé et dans le répertoire local du dispositif interrogé, alors on sélectionne le mode de réponse consistant à envoyer une réponse transparente au dispositif à l'origine du message de découverte).

Par ailleurs, on peut envisager également d'autres modes de réponse dans lesquels le contenu de la réponse dépend de paramètres tels que l'état du dispositif D2 et notamment le nombre de sessions déjà en cours au niveau du dispositif D2 et/ou du type de sessions déjà en cours (en fonction par exemple des services disponibles ou au contraire utilisés).

Pour illustrer les étapes mises en œuvre par le serveur d'application 2 lors du traitement du message MOPT, on suppose que les ensembles Ω, S et C suivants ont été définis :
- l'ensemble Ω de modes de réponse contient deux modes de réponse à savoir :
   ∘ Mode M1 : « réponse transparente au message de découverte »
   ∘ Mode M2 : « réponse partielle au message de découverte ne contenant que l'état du dispositif interrogé »
- l'ensemble C des critères contient un seul critère, à savoir : présence ou non de l'identifiant dans le répertoire local du dispositif interrogé ; et
- l'ensemble S des règles de sélection contient deux règles, à savoir :
   ∘ si l'identifiant est présent dans le répertoire local, alors on répond selon le mode M1 ;
   ∘ sinon on répond selon le mode M2.

Ces ensembles sont stockés dans la mémoire flash 2D du serveur d'application 2 lors d'une étape préalable de configuration (étape E0). Il convient de noter que le choix des ensembles Ω, S et C, peut être réalisé par l'utilisateur du dispositif D2 lui-même, par exemple par l'intermédiaire d'une interface web, vocale ou textuelle, etc.

Nous allons maintenant décrire le traitement du message MOPT réalisé conformément à l'invention par le serveur d'application 2, suite à son déclenchement sur détection d'un message SIP OPTIONS à destination du dispositif D2.

Le déclenchement du serveur d'application 2 se traduit par la réception par le serveur d'application 2, du message MOPT (étape E10).

Le serveur d'application 2 extrait du champ FROM du message MOPT reçu, un identifiant du dispositif D1 (étape E20). L'identifiant du dispositif D1 contenu dans le champ FROM est ici l'identifiant ID1.

Si le champ FROM ne contient pas d'identifiant du dispositif D1 ou reflète un anonymat du dispositif D1 (par exemple parce que l'identifiant du dispositif D1 a été masqué à l'émission par le dispositif D1), le serveur d'application 2 détermine si le message MOPT contient un champ SIP PRIVACY.

Le cas échéant, il détermine ensuite, s'il existe dans le message MOPT un champ P-Asserted-Identity contenant un identifiant certifié du dispositif D1 et susceptible d'avoir été introduit et/ou renseigné par le cœur de réseau CN1 traversé par le message MOPT suite à émission par le dispositif D1.

En effet, de façon connue en soi, les réseaux par lesquels transite un message émis par un dispositif à destination d'un autre dispositif, peuvent insérer, pour répondre à différents besoins (ex. facturation, routage du message, interceptions légales, etc.), un identifiant certifié du dispositif à l'origine du message. Cet identifiant est inséré ici par le cœur de réseau CN1 dans le champ P-Asserted-Identity du message.

Le cas échéant, le serveur d'application 2 extrait l'identifiant du dispositif D1 contenu dans ce champ P-Asserted-Identity.

Puis il détermine si l'identifiant ID1 du dispositif D1 extrait du message MOPT vérifie le ou les critères de filtrage définis dans l'ensemble C, stocké(s) dans la mémoire 2D (étape E30).

Dans l'exemple envisagé ici, un seul critère est stocké dans la mémoire 2D, à savoir le critère « présence ou non de l'identifiant du dispositif à l'origine du message SIP OPTIONS dans le répertoire local du dispositif interrogé ».

Ainsi, au cours de l'étape E30, le serveur d'application 2 examine si l'identifiant ID1 du dispositif D1 est présent (i.e. référencé) dans le répertoire local RL2 du dispositif D2.

Le cas échéant (réponse oui au test E40), conformément aux règles de sélection définies dans l'ensemble S, le serveur d'application 2 sélectionne le mode de réponse M1 (étape E50).

Autrement dit, il envoie au dispositif D1 une réponse transparente au message SIP OPTIONS contenant l'état du dispositif D2 ainsi que ses capacités (étape E60).

Dans le mode de réalisation décrit ici, l'état du dispositif D2 et ses capacités sont obtenues par le serveur d'application 2 directement du dispositif D2.

Plus précisément, en cas de réponse oui au test E40, le serveur d'application 2 prolonge (i.e. relaie) le message SIP OPTIONS MOPT vers le second dispositif D2, sans en changer son contenu.

Le dispositif D2 répond alors au message SIP OPTIONS de manière transparente, conformément au protocole SIP, c'est-à-dire en fournissant son état et ses capacités. La réponse du dispositif D2 emprunte le chemin inverse du message MOPT, conformément au mode de fonctionnement du protocole SIP. Cette réponse transite donc par le serveur d'application 2.

Celui intercepte le message de réponse provenant du dispositif D2 et élabore, à l'aide de ce message, sa réponse transparente au dispositif D1 contenant l'état du dispositif D2 et ses capacités conformément au mode de réponse M1 sélectionné.

Dans le mode de réalisation décrit ici, la réponse transparente envoyée par le serveur d'application 2 au dispositif D1 est similaire ou identique au message de réponse au message SIP OPTIONS prévu dans le document RFC 3261 de la norme SIP (même format et même contenu en ce qui concerne l'état et les capacités du dispositif D2).

En revanche, si l'identifiant ID1 n'est pas contenu dans le répertoire local RL2 du dispositif D2 (réponse non au test E40), le serveur d'application 2 sélectionne, conformément aux règles de sélection définies dans l'ensemble S, le mode de réponse M2 (étape E70).

Autrement dit, il envoie au dispositif D1 une réponse partielle au dispositif D1 contenant seulement un état du dispositif D2 (étape E80). Cette réponse partielle ne contient pas d'informations sur les capacités du dispositif D2.

Comme mentionné précédemment pour l'étape E60, l'information concernant l'état du dispositif D2 est obtenue par le serveur d'application 2 en interrogeant le dispositif D2, en lui transmettant ici le message SIP OPTIONS MOPT reçu.

Il convient de noter que si l'on envisage (et sélectionne) un mode de réponse selon lequel le serveur d'application 2 répond de façon erronée au dispositif D1 ou selon un message prédéterminé tel qu'un message « 404 NOT FOUND » ou « 480 TEMPORARILY UNAVAILABLE » ou encore « 408 TIME OUT », le serveur d'application 2 peut s'abstenir de consulter le dispositif D2 pour obtenir son état et ses capacités, et répondre directement au dispositif D1.

En revanche, dès lors qu'un mode de réponse incluant un état réel du dispositif D2 et/ou ses capacités réelles est sélectionné, le serveur d'application 2 transmet au dispositif D2 le message SIP OPTIONS MOPT reçu en provenance du dispositif D1, de façon transparente (i.e. sans en changer le contenu), puis il filtre et/ou adapte la réponse reçu du dispositif D2 au message SIP OPTIONS en fonction des règles de réponse configurées pour le mode de réponse sélectionné.

Ainsi, par exemple si le serveur d'application 2 détermine que le dispositif D2 est dans un état occupé, il envoie un message de réponse « 486 BUSY HERE » au dispositif D1 dans lequel aucune information sur les capacités du dispositif D2 n'est présente.

Dans le premier mode de réalisation précédemment décrit, le traitement conformément à l'invention du message SIP OPTIONS MOPT destiné au dispositif D2 est mis en œuvre par un serveur d'application 2 du cœur de réseau IP multimédia CN2. Autrement dit, l'entité de traitement de l'invention est le serveur d'application 2.

Toutefois, cette hypothèse n'est pas limitative, et l'entité de traitement des messages de découverte de l'état et des capacités du distant conformément à l'invention peut être intégrée dans d'autres équipements, comme notamment dans le dispositif destinataire du message de découverte.

La **figure 4** représente, dans son environnement, un système de communication 1' conforme à l'invention dans un second mode de réalisation.

Le système de communication 1' inclut deux dispositifs D1' et D2' gérés respectivement par un cœur de réseau IP multimédia CN1' et par un cœur de réseau IP multimédia CN2'. Les dispositifs D1' et D2' sont ici des terminaux munis de répertoires locaux, notés respectivement RL1' et RL2'.

Dans ce second mode de réalisation, le traitement conformément à l'invention d'un message de découverte MOPT' envoyé par le dispositif D1' à destination du dispositif D2' est mis en œuvre par le dispositif D2' lui-même. Autrement dit, le dispositif D2' est une entité de traitement au sens de l'invention.

Les dispositifs Dl', et les cœurs de réseau IP multimédia CN1' et CN2' sont similaires ou identiques aux dispositifs D1 et aux cœurs de réseau CN1 et CN2 décrits en référence à la figure 1, et ne sont pas décrits de nouveau en détails ici.

Le dispositif D2' est similaire au dispositif D2 de la figure 1. Il diffère toutefois du dispositif D2 en ce qu'il comporte une mémoire morte 3 sur laquelle est enregistré un programme d'ordinateur conforme à l'invention, comportant des instructions pour l'exécution des étapes d'un procédé de traitement conformément au second mode de réalisation de l'invention. Cette mémoire morte 3 constitue un support d'enregistrement conforme à l'invention, lisible par un processeur du dispositif D2'.

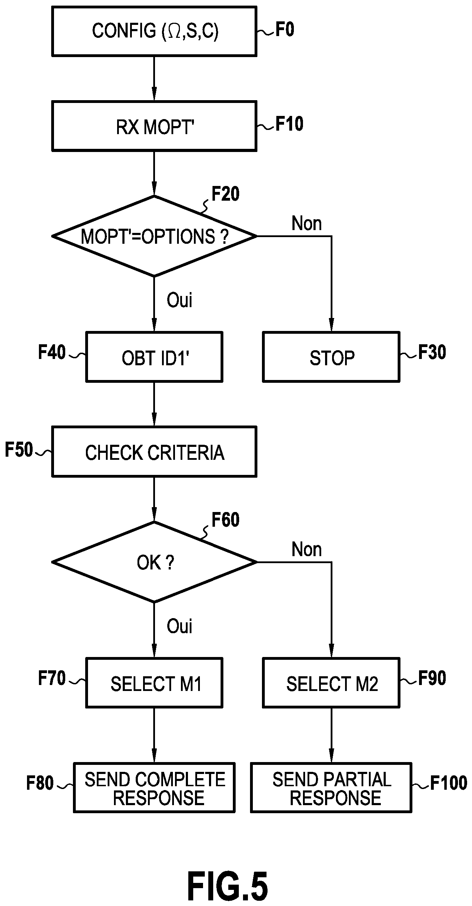

Nous allons maintenant décrire, en référence à la **figure 5****,** les principales étapes mises en œuvre par le dispositif D2' dans ce second mode de réalisation pour le traitement d'un message MOPT' de découverte de l'état et des capacités du distant, émis par le dispositif D1' à destination du dispositif D2'.

Le message MOPT' est ici un message SIP OPTIONS, tel que décrit de façon détaillée dans le document RFC 3261. Il contient dans un champ FROM, un identifiant ID1' du dispositif D1' à l'origine du message, et dans un champ Request-URI et dans un champ TO, un identifiant ID2' du dispositif D2' destinataire du message.

Pour illustrer les étapes mises en œuvre par le dispositif D2' lors du traitement du message MOPT', on se base sur les ensembles Ω, S et C précédemment définis. Ainsi :
- l'ensemble Ω de modes de réponse contient deux modes de réponse, à savoir :
   ∘ Mode M1 : « réponse transparente au message de découverte »
   ∘ Mode M2 : « réponse partielle au message de découverte ne contenant que l'état du dispositif interrogé »
- l'ensemble C des critères contient un seul critère, à savoir : présence ou non de l'identifiant dans le répertoire local du dispositif interrogé ; et
- l'ensemble S des règles de sélection contient deux règles, à savoir :
   ∘ si l'identifiant est présent dans le répertoire local, alors on répond selon le mode M1 ;
   ∘ sinon on répond selon le mode M2.

Ces ensembles sont stockés dans une mémoire flash non volatile du dispositif D2' lors d'une étape préalable de configuration (étape F0). Il convient de noter que la configuration du dispositif D2' et plus précisément le choix des ensembles Ω, S et C, peuvent être réalisés par l'utilisateur du dispositif D2' lui-même, par exemple par l'intermédiaire d'une interface web, vocale ou textuelle, etc.

Le message MOPT' émis par le dispositif D1' à destination du dispositif D2' est reçu par le dispositif D2' après avoir transité par les cœurs de réseau CN1' et CN2' (étape F10).

Sur réception du message MOPT', le dispositif D2' détermine dans un premier temps s'il s'agit d'un message de découverte de son état et de ses capacités, autrement dit ici s'il s'agit d'un message SIP OPTIONS qu'il doit traiter conformément à l'invention (étape F20).

S'il ne s'agit pas d'un message SIP OPTIONS (réponse non à l'étape F20), le dispositif D2' traite ce message classiquement, comme prévu par le protocole SIP, en fonction du type de ce message (étape F30).

Si le message reçu MOPT' est un message SIP OPTIONS (réponse oui à l'étape F20), le dispositif D2' traite ce message conformément à l'invention.

Ainsi :
- il extrait du champ FROM ou du champ P-Asserted-ID du message MOPT' reçu l'identifiant ID1' du dispositif D1' (étape F40) ;
- il détermine si cet identifiant ID1' vérifie le ou les critères de filtrage définis dans l'ensemble C, stocké(s) dans sa mémoire flash non volatile (étape F50) : autrement dit ici, il vérifie ici si l'identifiant ID1' est présent ou non dans le répertoire local RL2' du dispositif D2' ;
- il sélectionne, le cas échéant (réponse oui à l'étape test F60), le mode de réponse M1 (étape F70), et envoie au dispositif D1' une réponse transparente au message SIP OPTIONS MOPT' contenant son état et ses capacités « réels » (étape F80) ;
- sinon (réponse non à l'étape test F60), il sélectionne le mode de réponse M2 (étape F90) et envoie au dispositif D1' une réponse partielle au message SIP OPTIONS MOPT' contenant uniquement son état mais n'identifiant pas ses capacités (étape F100).

Les étapes F40, F50, F60, F70 et F90 étant identiques aux étapes E20, E30, E40, E50 et E70, elles ne seront pas décrites plus en détails ici. Les étapes F80 et F100 diffèrent des étapes E60 et E80 respectivement, en ce que le dispositif D2' élabore directement la réponse au message SIP OPTIONS MOPT' à partir de son état et/ou de ses capacités.

Dans les deux modes de réalisation décrits ici, le traitement du message SIP OPTIONS conformément à l'invention est réalisé indépendamment de l'existence ou non d'un dialogue entre les dispositifs D1 et D2, respectivement entre les dispositifs D1' et D2'.

En variante, on peut envisager de ne traiter les messages SIP OPTIONS conformément à l'invention que lorsque ceux-ci sont émis dans le cadre d'une transaction autonome ou transaction « standalone » entre les dispositifs, c'est-à-dire, qui n'est pas réalisée dans le cadre d'un dialogue établi entre les dispositifs ou qui n'initie pas un tel dialogue. L'invention présente en effet un avantage supplémentaire dans un tel contexte, car le dispositif destinataire du message de découverte n'a pas déjà donné son accord pour une communication avec le dispositif à l'origine du message de découverte.

## Revendications

1. Procédé de traitement d'un message reçu (MOPT, MOPT') en provenance d'un premier dispositif (D1, D1') et destiné à un second dispositif (D2, D2') géré par un cœur de réseau (CN2,CN2') IP multimédia, ledit procédé étant destiné à être mis en oeuvre par une entité de traitement (2, D2') lorsque ledit message reçu (MOPT, MOPT') est un message de découverte des capacités et de l'état du second dispositif (D2, D2'), et comprenant :
- une étape d'obtention (E20, F40) d'un identifiant (ID1, ID1') du premier dispositif (D1, D1') à partir d'un champ du message de découverte reçu (MOPT, MOPT') ; et
- une étape de sélection (E50, E70, F70, F90), en fonction de cet identifiant (ID1, ID1'), d'un mode de réponse (M1, M2) au message de découverte reçu parmi un ensemble prédéfini (Ω) contenant au moins deux modes de réponse (M1, M2),
ledit ensemble prédéfini (Ω) contenant au moins :
- un mode de réponse (M2) comprenant un envoi au premier dispositif d'une réponse partielle ou erronée au message de découverte, une réponse partielle identifiant une partie seulement des capacités du second dispositif ou reflétant seulement l'état du second dispositif, et une réponse erronée reflétant un état distinct de l'état réel du second dispositif et/ou des capacités ne correspondant pas aux capacités du second dispositif ; et
- un mode de réponse (M1) comprenant un envoi au premier dispositif d'une réponse transparente au message de découverte contenant les capacités et l'état du second dispositif au message de découverte.

2. Procédé de traitement selon la revendication 1 dans lequel le message de découverte (MOPT, MOPT') est un message SIP OPTIONS et le champ de ce message contenant l'identifiant du premier dispositif est un champ FROM ou un champ P-Asserted-Identity.

3. Procédé de traitement selon la revendication 1 dans lequel l'entité de traitement (2, D2') sélectionne un mode de réponse parmi l'ensemble prédéfini (Ω) en fonction de la présence ou non de l'identifiant du premier dispositif dans au moins une liste prédéfinie d'identifiants associée au second dispositif.

4. Procédé de traitement selon la revendication 3 dans lequel ladite liste prédéfinie est un répertoire (RL2, RL2') stocké sur le second dispositif (D2, D2') ou sur un équipement distant.

5. Procédé de traitement selon la revendication 1 dans lequel l'entité de traitement (2, D2') sélectionne un mode de réponse parmi l'ensemble prédéfini (Ω) en fonction de l'appartenance ou non de l'identifiant du premier dispositif à un domaine de réseau identique au domaine de réseau du second dispositif ou à un domaine de réseau autorisé.

6. Procédé de traitement selon la revendication 1 dans lequel l'entité de traitement (2, D2') sélectionne un mode de réponse parmi l'ensemble prédéfini (Ω) selon si l'identifiant du premier dispositif comprend ou non une partie utilisateur prédéterminée ou d'un type prédéterminé.

7. Procédé de traitement selon la revendication 1 dans lequel la réponse envoyée au premier dispositif (D1) dépend en outre d'un nombre et/ou d'un type de sessions en cours pour le second dispositif lors de la réception du message.

8. Programme d'ordinateur comportant des instructions pour l'exécution des étapes du procédé de traitement selon la revendication 1 lorsque ledit programme est exécuté par un ordinateur.

9. Support d'enregistrement lisible par un ordinateur sur lequel est enregistré un programme d'ordinateur comprenant des instructions pour l'exécution des étapes du procédé de traitement selon la revendication 1.

10. Entité de traitement (2, D2') d'un message reçu (MOPT, MOPT') en provenance d'un premier dispositif (D1, D1') et destiné à un second dispositif (D2, D2') géré par un cœur de réseau (CN2) IP multimédia, comprenant des moyens, activés si le message reçu (MOPT, MOPT') est un message de découverte des capacités et de l'état du second dispositif, comprenant :
- des moyens d'obtention d'un identifiant (ID1, ID1') du premier dispositif (D1, D17) à partir d'un champ du message de découverte reçu; et
- des moyens aptes à sélectionner, en fonction de cet identifiant (ID1, ID1'), un mode de réponse (M1, M2) audit message de découverte reçu (MOPT, MOPT') parmi un ensemble prédéfini (Ω) contenant au moins deux modes de réponse (M1, M2),
ledit ensemble prédéfini (Ω) contenant au moins :
- un mode de réponse (M2) comprenant un envoi au premier dispositif d'une réponse partielle ou erronée au message de découverte, une réponse partielle identifiant une partie seulement des capacités du second dispositif ou reflétant seulement l'état du second dispositif, et une réponse erronée reflétant un état distinct de l'état réel du second dispositif et/ou des capacités ne correspondant pas aux capacités du second dispositif ; et
- un mode de réponse (M1) comprenant un envoi au premier dispositif d'une réponse transparente au message de découverte contenant les capacités et l'état du second dispositif au message de découverte.

11. Terminal (D2') géré par un cœur de réseau IP multimédia (CN2') et comprenant une entité de traitement selon la revendication 10, d'un message reçu en provenance d'un dispositif et destiné audit terminal.

12. Serveur (2) associé à un cœur de réseau (CN2) IP multimédia gérant un dispositif (D2), ledit serveur comprenant une entité de traitement selon la revendication 10, d'un message reçu destiné audit dispositif (D2).

13. Système de communication (1, 1') comprenant :
- un premier dispositif (D1, D1') et un second dispositif (D2, D2') géré par un cœur de réseau (CN2) IP multimédia, le premier dispositif (D1, D1') étant adapté à émettre un message (MOPT, MOPT') de découverte des capacités et de l'état du second dispositif ; et
- une entité de traitement (2, D2') selon la revendication 10 apte à recevoir et à traiter ledit message de découverte (MOPT, MOPT').

## Patentansprüche

1. Verfahren zur Verarbeitung einer Nachricht (MOPT, MOPT'), die von einer ersten Vorrichtung (D1, D1') empfangen wird und die für eine zweite Vorrichtung (D2, D2'), die durch einen IP-Multimedia-Netzwerkkern (CN2, CN2') verwaltet wird, bestimmt ist, wobei das Verfahren dazu bestimmt ist, durch eine Verarbeitungseinheit (2, D2') implementiert zu werden, wenn die empfangene Nachricht (MOPT, MOPT') eine Nachricht zur Sondierung der Fähigkeiten und des Zustands der zweiten Vorrichtung (D2, D2') ist, und Folgendes beinhaltet:
- einen Schritt des Erhaltens (E20, F40) einer Kennung (ID1, ID1') der ersten Vorrichtung (D1, D1') anhand eines Felds der empfangenen Sondierungsnachricht (MOPT, MOPT'); und
- einen Schritt des Auswählens (E50, E70, F70, F90), in Abhängigkeit von dieser Kennung (ID1, ID1'), eines Antwortmodus (M1, M2) auf die empfangene Sondierungsnachricht aus einem vordefinierten Satz (Ω),
der mindestens zwei Anwortmodi (M1, M2) enthält,
wobei der vordefinierte Satz (Ω) mindestens Folgendes enthält:
- einen Antwortmodus (M2), der ein Senden, an die erste Vorrichtung, einer partiellen oder falschen Antwort auf die Sondierungsnachricht beinhaltet, wobei eine partielle Antwort nur einen Teil der Fähigkeiten der zweiten Vorrichtung identifiziert oder nur den Zustand der zweiten Vorrichtung widerspiegelt und wobei eine falsche Antwort einen Zustand, der sich von dem tatsächlichen Zustand der zweiten Vorrichtung unterscheidet, und/oder Fähigkeiten, die nicht den Fähigkeiten der zweiten Vorrichtung entsprechen, widerspiegelt; und
- einen Antwortmodus (M1), der ein Senden, an die erste Vorrichtung, einer transparenten Antwort auf die Sondierungsnachricht beinhaltet, die die Fähigkeiten und den Zustand der zweiten Vorrichtung auf die Sondierungsnachricht enthält.

2. Verarbeitungsverfahren nach Anspruch 1, wobei die Sondierungsnachricht (MOPT, MOPT') eine SIP-OPTIONS-Nachricht ist und das Feld dieser Nachricht, das die Kennung der ersten Vorrichtung enthält, ein FROM-Feld oder ein P-Asserted-Identity-Feld ist.

3. Verarbeitungsverfahren nach Anspruch 1, wobei die Verarbeitungseinheit (2, D2') in Abhängigkeit von dem Vorhandensein oder Nichtvorhandensein der Kennung der ersten Vorrichtung in mindestens einer vordefinierten Liste von Kennungen, die mit der zweiten Vorrichtung assoziiert ist, einen Antwortmodus aus dem vordefinierten Satz (Ω) auswählt.

4. Verarbeitungsverfahren nach Anspruch 3, wobei die vordefinierte Liste ein Adressbuch (RL2, RL2') ist, das in der zweiten Vorrichtung (D2, D2') oder in einer entfernten Ausrüstung gespeichert ist.

5. Verarbeitungsverfahren nach Anspruch 1, wobei die Verarbeitungseinheit (2, D2') in Abhängigkeit von der Zugehörigkeit oder Nichtzugehörigkeit der Kennung der ersten Vorrichtung zu einer Netzwerkdomäne, die mit der Netzwerkdomäne der zweiten Vorrichtung identisch ist, oder zu einer berechtigten Netzwerkdomäne einen Antwortmodus aus dem vordefinierten Satz (Ω) auswählt.

6. Verarbeitungsverfahren nach Anspruch 1, wobei die Verarbeitungseinheit (2, D2') je nachdem, ob die Kennung der ersten Vorrichtung einen vorgegebenen Benutzerabschnitt oder einen Benutzerabschnitt eines vorgegebenen Typs beinhaltet, einen Antwortmodus aus dem vordefinierten Satz (Ω) auswählt.

7. Verarbeitungsverfahren nach Anspruch 1, wobei die an die erste Vorrichtung (D1) gesendete Antwort ferner von einer Anzahl und/oder einem Typ von Sitzungen abhängt, die während des Empfangs der Nachricht für die zweite Vorrichtung aktiv sind.

8. Computerprogramm, das Anweisungen zur Ausführung der Schritte des Verarbeitungsverfahrens nach Anspruch 1 umfasst, wenn das Programm durch einen Computer ausgeführt wird.

9. Computerlesbares Aufzeichnungsmedium, auf dem ein Computerprogramm aufgezeichnet ist, das Anweisungen zur Ausführung der Schritte des Verarbeitungsverfahrens nach Anspruch 1 beinhaltet.

10. Einheit zur Verarbeitung (2, D2') einer Nachricht (MOPT, MOPT'), die von einer ersten Vorrichtung (D1, D1') empfangen wird und die für eine zweite Vorrichtung (D2, D2'), die durch einen IP-Multimedia-Netzwerkkern (CN2) verwaltet wird, bestimmt ist, beinhaltend Mittel, die aktiviert werden, wenn die empfangene Nachricht (MOPT, MOPT') eine Nachricht zur Sondierung der Fähigkeiten und des Zustands der zweiten Vorrichtung ist, beinhaltend:
- Mittel zum Erhalten einer Kennung (ID1, ID1') der ersten Vorrichtung (D1, D1') anhand eines Felds der empfangenen Sondierungsnachricht; und
- Mittel, die fähig sind, in Abhängigkeit von dieser Kennung (ID1, ID1') einen Antwortmodus (M1, M2) auf die empfangene Sondierungsnachricht (MOPT, MOPT') aus einem vordefinierten Satz (Ω), der mindestens zwei Anwortmodi (M1, M2) enthält, auszuwählen,
wobei der vordefinierte Satz (Ω) mindestens Folgendes enthält:
- einen Antwortmodus (M2), der ein Senden, an die erste Vorrichtung, einer partiellen oder falschen Antwort auf die Sondierungsnachricht beinhaltet, wobei eine partielle Antwort nur einen Teil der Fähigkeiten der zweiten Vorrichtung identifiziert oder nur den Zustand der zweiten Vorrichtung widerspiegelt und wobei eine falsche Antwort einen Zustand, der sich von dem tatsächlichen Zustand der zweiten Vorrichtung unterscheidet, und/oder Fähigkeiten, die nicht den Fähigkeiten der zweiten Vorrichtung entsprechen, widerspiegelt; und
- einen Antwortmodus (M1), der ein Senden, an die erste Vorrichtung, einer transparenten Antwort auf die Sondierungsnachricht beinhaltet, die die Fähigkeiten und den Zustand der zweiten Vorrichtung auf die Sondierungsnachricht enthält.

11. Endgerät (D2'), das durch einen IP-Multimedia-Netzwerkkern (CN2') verwaltet wird und eine Einheit nach Anspruch 10 zur Verarbeitung einer Nachricht beinhaltet, die von einer Vorrichtung empfangen wird und für das Endgerät bestimmt ist.

12. Server (2), der mit einem IP-Multimedia-Netzwerkkern (CN2), der eine Vorrichtung (D2) verwaltet, assoziiert ist, wobei der Server eine Einheit nach Anspruch 10 zur Verarbeitung einer empfangenen Nachricht, die für die Vorrichtung (D2) bestimmt ist, beinhaltet.

13. Kommunikationssystem (1, 1'), das Folgendes beinhaltet:
- eine erste Vorrichtung (D1, D1') und eine zweite Vorrichtung (D2, D2'), die durch einen IP-Multimedia-Netzwerkkern (CN2) verwaltet wird, wobei die erste Vorrichtung (D1, D1') dazu angepasst ist, eine Nachricht (MOPT, MOPT') zur Sondierung der Fähigkeiten und des Zustands der zweiten Vorrichtung auszusenden; und
- eine Verarbeitungseinheit (2, D2') nach Anspruch 10, die fähig ist ist, die Sondierungsnachricht (MOPT, MOPT') zu empfangen und zu verarbeiten.

## Claims

1. Method for processing a message (MOPT, MOPT') received from a first device (D1, D1') and intended for a second device (D2, D2') managed by an IP multimedia core network (CN2, CN2'), said method being intended to be implemented by a processing entity (2, D2') when said received message (MOPT, MOPT') is a message for discovering the capabilities and the status of the second device (D2, D2') and comprising:
- a step (E20, F40) of obtaining an identifier (ID1, ID1') of the first device (D1, D1') from a field of the received discovery message (MOPT, MOPT'); and
- a step (E50, E70, F70, F90) of selecting, on the basis of this identifier (ID1, ID1'), a response mode (M1, M2) for responding to the received discovery message from a predefined set (Ω) containing at least two response modes (M1, M2),
said predefined set (Ω) containing at least:
- a response mode (M2) comprising sending, to the first device, a partial or incorrect response to the discovery message, a partial response identifying only some of the capabilities of the second device or reflecting only the status of the second device, and an incorrect response reflecting a status distinct from the actual status of the second device and/or capabilities that do not correspond to the capabilities of the second device; and
- a response mode (M1) comprising sending, to the first device, a transparent response to the discovery message containing the capabilities and the status of the second device to the discovery message.

2. Processing method according to Claim 1, wherein the discovery message (MOPT, MOPT') is a SIP OPTIONS message, and the field of this message containing the identifier of the first device is a FROM field or a P-Asserted-Identity field.

3. Processing method according to Claim 1, wherein the processing entity (2, D2') selects a response mode from the predefined set (Ω) on the basis of the presence or absence of the identifier of the first device in at least one predefined list of identifiers that is associated with the second device.

4. Processing method according to Claim 3, wherein said predefined list is a directory (RL2, RL2') stored on the second device (D2, D2') or on a remote equipment.

5. Processing method according to Claim 1, wherein the processing entity (2, D2') selects a response mode from the predefined set (Ω) on the basis of whether or not the identifier of the first device belongs to a network domain identical to the network domain of the second device or to an authorized network domain.

6. Processing method according to Claim 1, wherein the processing entity (2, D2') selects a response mode from the predefined set (Ω) depending on whether or not the identifier of the first device comprises a predetermined user part or a user part of a predetermined type.

7. Processing method according to Claim 1, wherein the response sent to the first device (D1) further depends on a number and/or a type of on-going sessions for the second device when the message is received.

8. Computer program including instructions for executing the steps of the processing method according to Claim 1 when said program is executed by a computer.

9. Computer-readable recording medium on which there is recorded a computer program comprising instructions for executing the steps of the processing method according to Claim 1.

10. Processing entity (2, D2') for processing a message (MOPT, MOPT') received from a first device (D1, D1') and intended for a second device (D2, D2') managed by an IP multimedia core network (CN2), comprising means, which are activated if the received message (MOPT, MOPT') is a message for discovering the capabilities and the status of the second device, comprising:
- means for obtaining an identifier (ID1, ID1') of the first device (D1, D1') from a field of the received discovery message; and
- means that are able to select, on the basis of this identifier (ID1, ID1'), a response mode (M1, M2) for responding to said received discovery message (MOPT, MOPT') from a predefined set (Ω) containing at least two response modes (M1, M2),
said predefined set (Ω) containing at least:
- a response mode (M2) comprising sending, to the first device, a partial or incorrect response to the discovery message, a partial response identifying only some of the capabilities of the second device or reflecting only the status of the second device, and an incorrect response reflecting a status distinct from the actual status of the second device and/or capabilities that do not correspond to the capabilities of the second device; and
- a response mode (M1) comprising sending, to the first device, a transparent response to the discovery message containing the capabilities and the status of the second device to the discovery message.

11. Terminal (D2'), which is managed by an IP multimedia core network (CN2') and comprises a processing entity according to Claim 10 for processing a message received from a device and intended for said terminal.

12. Server (2) associated with an IP multimedia core network (CN2) that manages a device (D2), said server comprising a processing entity according to Claim 10 for processing a received message intended for said device (D2).

13. Communication system (1, 1') comprising:
- a first device (D1, D1') and a second device (D2, D2') managed by an IP multimedia core network (CN2), the first device (D1, D1') being designed to send a message (MOPT, MOPT') for discovering the capabilities and the status of the second device; and
- a processing entity (2, D2') according to Claim 10 that is able to receive and process said discovery message (MOPT, MOPT').
